# EUROPÄISCHE PATENTSCHRIFT

(11) **EP 3 821 507 B1**
(45) Veröffentlichungstag und Bekanntmachung des Hinweises auf die Patenterteilung: **23.08.2023**
(21) Anmeldenummer: 19769022.5
(22) Anmeldetag: 26.08.2019
(51) Int. Cl.: H02B 13/025

(54) **DRUCKENTLASTUNGSVORRICHTUNG**
PRESSURE RELIEF DEVICE
DISPOSITIF DE DÉCHARGE DE SURPRESSION

(30) Priorität: 07.09.2018 DE 102018215215
(43) Veröffentlichungstag der Anmeldung: 19.05.2021
(73) Patentinhaber: Siemens Aktiengesellschaft, 80333 München (DE)
(72) Erfinder: AYKOC, Bidar, 63477 Maintal (DE)
(74) Vertreter: Siemens Patent Attorneys
(86) Internationale Anmeldenummer: PCT/EP2019/072665
(87) Internationale Veröffentlichungsnummer: WO 2020/048802

(56) Entgegenhaltungen:
- WO-A1-2012/169082
- JP-U- S59 126 507
- US-B2- 9 593 863

## Beschreibung

Die Erfindung betrifft eine Druckentlastungsvorrichtung, insbesondere eine Druckentlastungsvorrichtung für Mittel- und/oder Hochspannungsanlagen, wie Schaltanlagen.

Im Stand der Technik weisen Anlagen für Mittel- und/oder Hochspannungen, insbesondere Schaltanlagen, Druckentlastungskanäle auf, deren Auslass, also der potentielle Gasaustrittsbereich, derart verschlossen ist, dass bei einem Überdruck in der Mittel- und/oder Hochspannungsanlage eine ausreichende Öffnung zur Druckentlastung besteht, bzw. geschaffen wird. Das wird beispielsweise durch Sollbruchstellen, wie perforierte Blechteile, und/oder verbiegbare Bleche oder Klappen erreicht. Im normalen Betrieb soll der potentielle Gasaustrittsbereich aber verschlossen sein.

Bei Klappen aus dem Stand der Technik besteht die Gefahr, dass diese durch Erschütterungen, Vibrationen und/oder beim Transport öffnen und so der Druckentlastungskanal nicht ausreichend verschlossen ist.

Daher ist es Aufgabe der Erfindung eine alternative Druckentlastungsvorrichtung bereitzustellen, die die Nachteile aus dem Stand der Technik behebt, günstig zu produzieren ist und zuverlässig und schnell bei einem Überdruck, wie er zum Beispiel bei einem Lichtbogen in einer Mittel- und/oder Hochspannungsanlage entstehen kann, ausreichend oder weitestgehend öffnet.

Diese Aufgabe wird durch die Vorrichtung des unabhängigen Anspruchs 1 und das Verfahren zum Betreiben gemäß Anspruch 14 gelöst.

Die US 9,593,863 B2, JP S59 126507U und WO2012/169082A1 zeigen Druckentlastungsvorrichtungen und gehören zum technischen Hintergrund der Erfindung.

Ein Ausführungsbeispiel bezieht sich auf eine Druckentlastungsvorrichtung, mit einer Druckführungsvorrichtung, wobei die Druckführungsvorrichtung einen oder mehr Gaseintrittsbereiche und einen oder mehr Gasaustrittsbereiche aufweist, und mit einem Druckführungsvorrichtungsverschluss, wobei der Druckführungsvorrichtungsverschluss in einer ersten Position (10) die Druckführungsvorrichtung, und damit den oder die Gasaustrittsbereiche, verschließt und wobei der Druckführungsvorrichtungsverschluss in einer zweiten Position die Druckführungsvorrichtung, und damit den oder die Gasaustrittsbereiche, nicht verschließt, wobei die Druckführungsvorrichtung
- ein oder mehr Aufnahmeelemente,
- und ein oder mehr Sperrelemente,
aufweist,
der Druckführungsvorrichtungsverschluss ein oder mehr Befestigungselemente und ein oder mehr Sperrvermittler aufweist, wobei das oder die
Befestigungselemente jeweils ein Aufnahmegegenstückelement aufweisen und das Aufnahmegegenstückelement und das Aufnahmeelemente derart verbunden sind, dass der Druckführungsvorrichtungsverschluss mit der Druckführungsvorrichtung beweglich verbunden ist und der Druckführungsvorrichtungsverschluss relativ zu der Druckführungsvorrichtung entlang einer Druckausbreitungsrichtung verschiebbar und rotierbar anordenbar ist,
dass das oder die Sperrelemente mit den Sperrvermittlern in der ersten Position eine Rotation des Druckführungsvorrichtungsverschlusses relativ zu der Druckführungsvorrichtung verhindern und beginnend mit einer Übergangsposition bis einschließlich der zweiten Position eine Rotation des Druckführungsvorrichtungsverschlusses relativ zu der Druckführungsvorrichtung zulassen, indem in der Übergangsposition der Sperrvermittler von dem Sperrelement freigegeben wird. Bei der Verschiebung entlang der Druckausbreitungsrichtung aus der ersten Position heraus werden der oder die Sperrvermittler also derart bewegt, dass der oder die Sperrvermittler nicht mehr derart mit dem oder den Sperrelementen wechselwirken, dass die Rotation des Druckführungsvorrichtungsverschlusses verhindert wird. Die Übergansposition wird also erreicht, sobald die Verschiebung des Druckführungsvorrichtungsverschlusses bewirkt, dass der oder die Sperrvermittler nicht mehr derart mit dem oder den Sperrelementen wechselwirken, dass die Rotation des Druckführungsvorrichtungsverschlusses verhindert wird. Bevorzugt werden zwei Befestigungselemente.

Bevorzugt wird, dass die Druckführungsvorrichtung ein Druckentlastungskanal, insbesondere ein modular aufgebauter Druckentlastungskanal, ist und der Druckführungsvorrichtungsverschluss von einer Klappe gebildet wird.

Auch wird bevorzugt, dass die Rotation des Druckführungsvorrichtungsverschlusses durch eine Erdanziehungskraft und/oder einen Überdruck in Druckführungsvorrichtung bewirkbar ist. Die Erdanziehungskraft reicht also aus um die Rotation des Druckführungsvorrichtungsverschlusses zu bewirken, sobald die Sperrelemente und die Sperrvermittler nicht mehr derart wechselwirken, dass die Rotation des Druckführungsvorrichtungsverschlusses verhindert wird. Alternativ oder ergänzend ist die Rotation auch durch einen Überdruck in Druckführungsvorrichtung bewirkbar. Der Überdruck wird beispielsweise durch oder bei einem Störfall, insbesondere einem Störlichtbogen in einer Mittelspannungs- und/oder Hochspannungsanlage, erzeugt. Die Erdanziehungskraft dient hier auch allgemein zur Definition der Begriffe oben und unten, also unten ist die Richtung, in die die Erdanziehungskraft wirkt, oben die der Richtung der Wirkung der Erdanziehungskraft entgegen gerichtete Richtung.

Weiter wird bevorzugt, dass die Druckführungsvorrichtung weiter ein oder mehr Rotationsbegrenzer aufweist, wobei der oder die Rotationsbegrenzer eine mögliche Rotation des Druckführungsvorrichtungsverschlusses relativ zu der Druckführungsvorrichtung zwischen der Übergangsposition und der zweiten Position begrenzen.

Bevorzugt wird auch, dass der oder die Rotationsbegrenzer eine mögliche Rotation des Druckführungsvorrichtungsverschlusses relativ zu der Druckführungsvorrichtung zwischen der Übergangsposition und der zweiten Position durch ein Zusammenwirken mit den Sperrvermittlern begrenzen. Die Rotationsbewegung wird also dadurch beendet, dass der Sperrvermittler an einer weiteren Bewegung in der Bewegungsrichtung durch den Rotationsbegrenzer gehindert wird. Eine solche Maßnahme bewirkt definierte Bewegungen und definierte Endzustände.

Weiter wird bevorzugt, dass die Verschiebung des Druckführungsvorrichtungsverschlusses relativ zur Druckführungsvorrichtung entlang der Druckausbreitungsrichtung durch einen Überdruck, insbesondere durch einen Überdruck, der durch einen Lichtbogen in entsteht, bewirkbar ist.

Bevorzugt wird auch, dass die Druckführungsvorrichtung eine Halteelementführung aufweist, in die in der ersten Position ein Halteelement eingreift, wobei zwischen der ersten Position und der Übergangsposition das Halteelement teilweise in die Halteelementführung eingreift und mit Erreichen der Übergangsposition das Halteelement die Halteelementführung verlässt, so dass eine Rotation des Druckführungsvorrichtungsverschlusses relativ zu der Druckführungsvorrichtung, insbesondere um ein oder mehr, besonders bevorzugt zwei, Aufnahmeelemente, nicht mehr verhindert wird.

Insbesondere wird bevorzugt, dass beim Überführen des Druckführungsvorrichtungsverschlusses der ersten Position in die Übergangsposition eine Verharrungskraft überwunden werden muss oder wird, die zwischen dem Halteelement und der Halteelementführung wirkt. Das bewirkt eine weitere Sicherung des Druckführungsvorrichtungsverschlusses gegen unbeabsichtigtes Öffnen.

Bevorzugt wird auch, dass die zu überwindende Verharrungskraft durch eine Klemmvorrichtung, beispielsweise zum Bewirken eines Kraftschlusses, und/oder Magnethalterung erzeugbar ist.

Auch wird bevorzugt, dass die Magnethalterung aus einem oder mehr Permanentmagneten und einen oder mehr Magnetelementen gebildet wird, wobei der eine oder die mehreren Permanentmagnete mit den Magnetelementen in der ersten Position in Wechselwirkung stehen und entweder der oder die Permanentmagnete an der Halteelementführung und die Magnetelemente an dem Halteelement angeordnet sind oder die Permanentmagnete an dem Halteelement und die Magnetelemente an der Halteelementführung angeordnet sind.

Weiter wird bevorzugt, dass die Permanentmagnete sich teilweise oder vollständig über eine Fläche der Halteelementführung erstrecken.

Bevorzugt wird auch, dass die Magnetelemente durch ein ferromagnetisch oder paramagnetisch ausgeführtes Halteelement gebildet werden.

Auch wird bevorzugt, dass die Magnetelemente durch eine ferromagnetisch oder paramagnetisch ausgeführte Halteelementführung gebildet wird und die Permanentmagnete sich teilweise oder vollständig über eine Fläche des Halteelementes erstrecken oder an das Halteelement angrenzen.

Weiter wird bevorzugt, dass das Halteelement ein paramagnetisches Material enthält und die Permanentmagnete an das Halteelement angrenzen.

Ein weiteres Ausführungsbeispiel bezieht sich auf eine Mittel- und/oder Hochspannungsanlage, insbesondere eine Schaltanlage für Mittel und/oder Hochspannungen, mit einer eine Druckentlastungsvorrichtung nach einer oder mehrerer der vorstehenden Ausführungen.

Ein anderes Ausführungsbeispiel bezieht sich auf ein Verfahren zum Betreiben einer Druckentlastungsvorrichtung nach einer oder mehreren der vorstehenden Ausführungen, wobei die im Falle eines Überdruckes in der Druckentlastungsvorrichtung der Druckführungsvorrichtungsverschluss durch den Überdruck entlang der Druckausbreitungsrichtung relativ zur Druckführungsvorrichtung aus der ersten Position in eine Übergangsposition bewegt wird und weiter durch eine Erdanziehungskraft und den Überdruck in der Druckentlastungsvorrichtung der Druckführungsvorrichtungsverschluss in eine Rotation des Druckführungsvorrichtungsverschlusses relativ zu der Druckführungsvorrichtung versetzt wird, wodurch der Druckführungsvorrichtungsverschluss den oder die Gasaustrittsbereiche nicht mehr verschlossen sind.

Ein weiteres Ausführungsbeispiel bezieht sich auf ein Verfahren zum Betreiben einer Mittel- und/oder Hochspannungsanlage, insbesondere eine Schaltanlage für Mittel und/oder Hochspannungen, mit einer eine Druckentlastungsvorrichtung nach einer oder mehrerer der vorstehenden,
wobei die im Falle eines Überdruckes in der Druckentlastungsvorrichtung der Druckführungsvorrichtungsverschluss durch den Überdruck entlang der Druckausbreitungsrichtung relativ zur Druckführungsvorrichtung aus der ersten Position in eine Übergangsposition bewegt wird und weiter durch eine Erdanziehungskraft und den Überdruck in der Druckentlastungsvorrichtung der Druckführungsvorrichtungsverschluss in eine Rotation des Druckführungsvorrichtungsverschlusses relativ zu der Druckführungsvorrichtung versetzt wird, wodurch der Druckführungsvorrichtungsverschluss den oder die Gasaustrittsbereiche nicht mehr verschlossen sind.

Ein weiteres Ausführungsbeispiel bezieht sich auf einen Mittelspannungsschaltanlage oder Hochspannungsschaltanlage mit einer Druckentlastungsvorrichtung nach einer oder mehreren der obenstehenden Ausführungen.

Im Folgenden wird die Erfindung anhand von Figuren näher erläutert.
- Fig. 1:: Perspektivische Ansicht einer schematischen Darstellung einer erfindungsgemäßen Druckentlastungsvorrichtung;
- Fig. 2:: Perspektivische Ansicht einer schematischen Darstellung einer erfindungsgemäßen Druckentlastungsvorrichtung mit geöffnetem Druckführungsvorrichtungsverschluss;
- Fig. 3:: Schematische Frontansicht einer erfindungsgemäßen Druckentlastungsvorrichtung mit geschlossenem Druckführungsvorrichtungsverschluss;
- Fig. 4:: Schnittbild der schematischen Frontansicht der Figur 3 in einer Übergangsposition;
- Fig. 5:: Ausschnittsvergrößerung eines schematischen Schnittbildes ähnlich Figur 4 in einer ersten Position;
- Fig. 6:: Ausschnittsvergrößerung eines schematischen Schnittbildes ähnlich Figur 4 in einer Übergangsposition;
- Fig. 7:: Ausschnittsvergrößerung eines schematischen Schnittbildes ähnlich Figur 4 in einer zweiten Position.

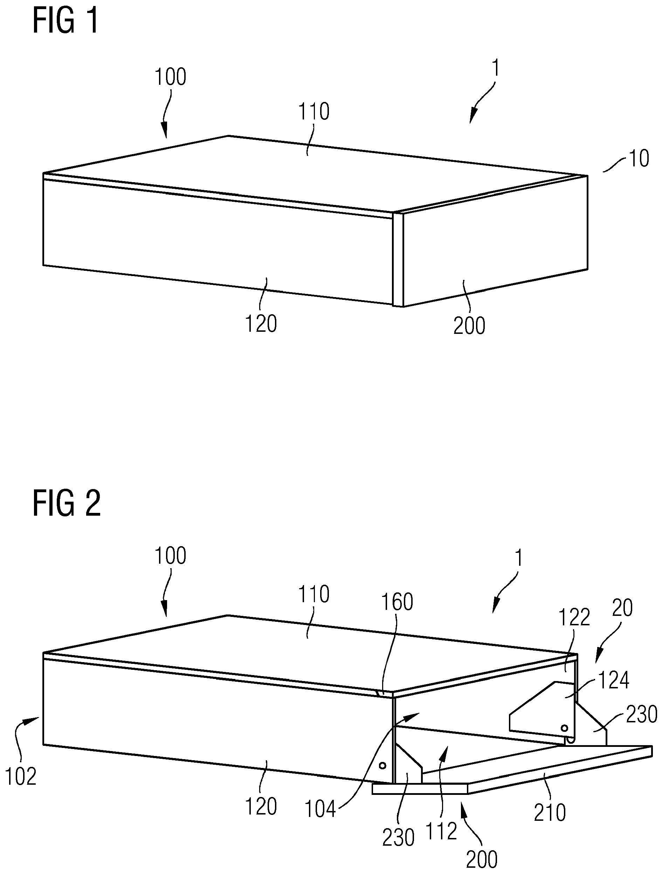

Die Figur 1 zeigt eine perspektivische Ansicht einer schematischen Darstellung einer erfindungsgemäßen Druckentlastungsvorrichtung 1 mit einer Druckführungsvorrichtung 100 und einem Druckführungsvorrichtungsverschluss 200 an einer Seite. Der Druckführungsvorrichtungsverschluss 200 befindet sich in einer ersten Position 10 an der Druckführungsvorrichtung 100 und verschließt die Druckführungsvorrichtung 100 so an der offenen Seite, an der er angeordnet ist. Die Druckführungsvorrichtung 100 verfügt hier über zwei Seitenflächen, von denen eine erste Seitenfläche 120 sichtbar ist, und eine sichtbare Oberseite 110 und eine nicht dargestellte Unterseite. Die nicht sichtbare Seite, die der durch den Druckführungsvorrichtungsverschluss 200 verschlossenen Seite gegenüberliegt ist hier offen und dient als ein Einlass in die Druckführungsvorrichtung 100 der Druckentlastungsvorrichtung 1. Alternativ kann der Einlass auch an der Oberseite 110 und/oder an der nicht dargestellten Unterseite und/oder an der ersten Seitenfläche 120 und/oder der nicht dargestellten zweiten Seitenfläche 122 angeordnet sein.

Die Figur 2 zeigt eine perspektivische Ansicht einer schematischen Darstellung einer erfindungsgemäßen Druckentlastungsvorrichtung 1 mit einer Druckführungsvorrichtung 100 und einem Druckführungsvorrichtungsverschluss 200 an einer Seite. Der Druckführungsvorrichtungsverschluss 200 befindet sich in einer zweiten Position 20 an der Druckführungsvorrichtung 100 und verschließt die Druckführungsvorrichtung 100 so nicht an der Seite, an der er angeordnet ist. Die Druckführungsvorrichtung 100 verfügt hier über zwei Seitenflächen, eine erste Seitenfläche 120 und eine zweite Seitenfläche 122, und eine Oberseite 110 und eine Unterseite 112. Außerdem ist ein Gaseintrittsbereich 102 und ein Gasaustrittsbereich 104 gekennzeichnet, wobei der Gasaustrittsbereich 104 mit dem Druckführungsvorrichtungsverschluss 200 verschließbar ist. Der Druckführungsvorrichtungsverschluss 200 ist mit zwei Befestigungselementen 230 an der Druckführungsvorrichtung 100 beweglich befestigt, beziehungsweise angeordnet. Eine Abdeckung 124 für das Befestigungselement 230 dient der Halterung der Befestigungselemente 230 und verbessert auch die Stabilität und die Montierbarkeit. Der Druckführungsvorrichtungsverschluss 200 verfügt in diesem Beispiel über ein Halteelement 210, das in die Halteelementführung 160 eingreifen kann.

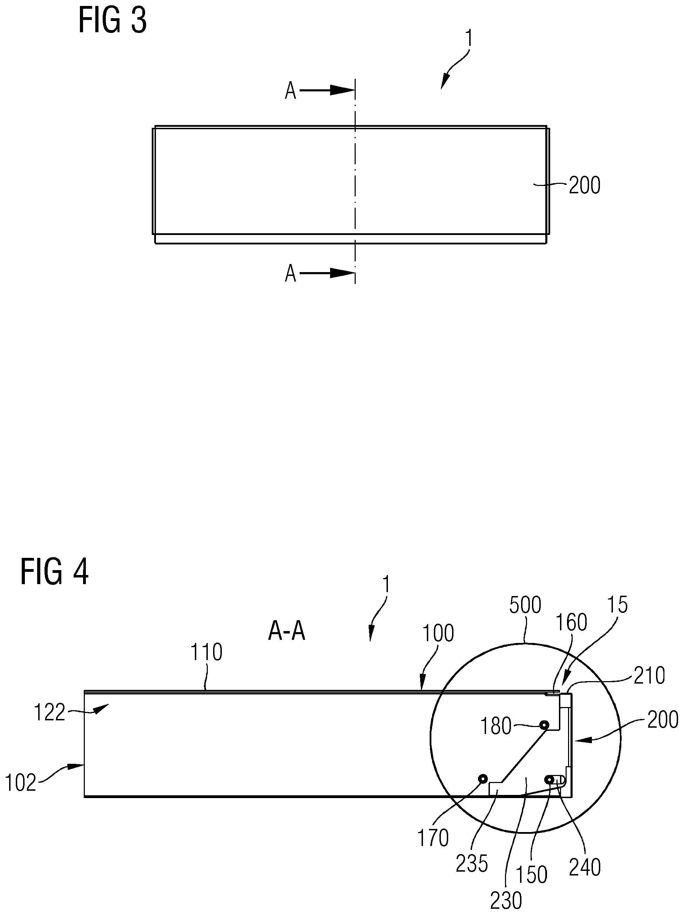

Die Figur 3 zeigt eine schematische Frontansicht einer erfindungsgemäßen Druckentlastungsvorrichtung 1 mit einem Druckführungsvorrichtungsverschluss 200. Entlang der Linie A-A ist das Schnittbild der Figur 4 erstellt worden.

Die Figur 4 zeigt ein Schnittbild der schematischen Frontansicht der Figur 3 in einer Übergangsposition 15, in der der Druckführungsvorrichtungsverschluss 200 derart entlang einer Druckausbreitungsrichtung 1510 von dem Sperrelement 170 weggeschoben ist, dass das Sperrelement 170 eine Rotationsbewegung des Druckführungsvorrichtungsverschlusses 200 um ein Aufnahmeelement 150, bzw. je Seite ein Aufnahmeelement 150, nicht mehr durch Blockade eines Sperrvermittlers 235 verhindert. Der Sperrvermittler 235 wird hier durch einen Ausläufer des Befestigungselementes 230 gebildet, des auch das Aufnahmegegenstückelement 240 beherbergt, das einerseits die Verschiebung entlang der Druckausbreitungsrichtung 1510 vom Aufnahmeelement 150 weg oder zum Aufnahmeelement 150 hin erlaubt und andererseits auch die Rotation des Druckführungsvorrichtungsverschlusses 200 um ein Aufnahmeelement 150 ermöglicht. In diesem Beispiel ist das Aufnahmegegenstückelement 240 ein Langloch. Gezeigt ist im Schnittbild der Figur 4 nur das Befestigungselement 230 das an der zweiten Seitenfläche 122 angeordnet ist, ein analoger Aufbau findet sich auch an der ersten Seitenfläche 120, wie der Figur 2 zu entnehmen ist. Auch die weiteren an der zweiten Seitenfläche 122 angeordneten Teile finden sich bevorzugt auch an der ersten Seitenfläche 120 der Druckführungsvorrichtung 100. Bevorzugt weist die die zweite Seitenfläche 122 auch einen Rotationsbegrenzer 180 auf, der als Anschlag für den Sperrvermittler dient und so die Rotation des Druckführungsvorrichtungsverschlusses 200 um die Aufnahmeelemente 150 begrenzt.

Weiter zeigt die Figur 4 eine bevorzugte Ausführung der Druckführungsvorrichtung 100, bei der die Oberseite 110 der Druckführungsvorrichtung 100 eine Halteelementaufnahme 150 aufweist, die ausgestaltet ist ein Halteelement 210, hier der obere umgebogene Rand des Druckführungsvorrichtungsverschlusses 200 derart aufzunehmen, dass das Halteelement 210 Formschlüssig in die Halteelementführung 160 aufgenommen werden kann und in einer weiter bevorzugten Ausführung auch Kraftschlüssig die Verschiebung des Druckführungsvorrichtungsverschlusses 200 vom Aufnahmeelement 150 weg oder zum Aufnahmeelement 150 erschwert. Dies kann beispielsweise über eine Klemmwirkung geschehen, aber auch durch eine magnetische Wechselwirkung, die gegebenenfalls durch zusätzliche Elemente einer Magnethalterung erzeugt wird.

Bei der gezeigten Übergangsposition 15 wird der Sperrvermittler 235 gerade nicht mehr durch das Sperrelement 170 an einer Rotation gehindert und auch das Halteelement 210 hat die Halteelementführung 160 verlassen, so dass weder eine Rotation durch die Führung verhindert und/oder erschwert wird noch eine Kraft, sei es durch Klemmen oder magnetische Wechselwirkung, einer Verschiebung oder Rotationsbewegung entgegenwirkt.

Der Kreis 500 markiert den Bereich, der in den folgenden Figuren dargestellt ist, allerding in verschiedenen Positionen.

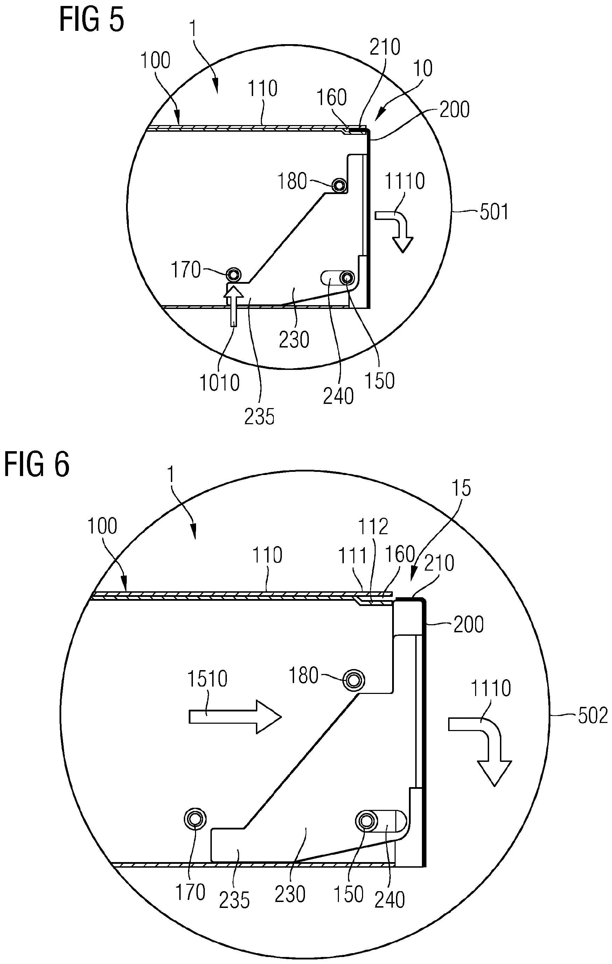

Die Figur 5 zeigt eine Ausschnittsvergrößerung 501 des Kreises 500 aus der Figur 4 eines schematischen Schnittbildes ähnlich Figur 4 in einer ersten Position 10. In der ersten Position 10 ist die Druckentlastungsvorrichtung 1 verschlossen. Das heißt, dass der Druckführungsvorrichtungsverschluss 200 eine Öffnung, den in Figur 2 gezeigten Gasaustrittsbereich 104, an der Druckführungsvorrichtung 100 verschließt.

In der gezeigten bevorzugten Variante greift in der ersten Position 10 das Halteelement 210 des Druckführungsvorrichtungsverschlusses 200 in die Halteelementführung 160 ein und wird dort weiter bevorzugt durch Klemmen oder eine magnetische Wechselwirkung zusätzlich gehalten. Die Halteelementführung 160 ist hier eine Y-artige Öffnung in oder an der Oberseite 110 der Druckführungsvorrichtung 100 angeordnet, kann aber auch an einer Seitenfläche oder der Unterseite der Druckführungsvorrichtung 100 oder mehreren der angegebenen Orte angeordnet sein.

Das Sperrelement 170 verhindert, blockiert, in der ersten Position eine Rotation des Druckführungsvorrichtungsverschlusses 200 um das Aufnahmeelement 150, da der Sperrvermittler 235, an dem Befestigungselement 230, durch das Sperrelement 170 an einer anderen Bewegung als einer Lateralbewegung gehindert wird. Das Befestigungselement 230 ist an einem Aufnahmeelement 150 aufgehängt, wobei das Aufnahmeelement 150 hier in das Aufnahmegegenstückelement 240, hier ein Langloch im Befestigungselement 230, eingreift. Der Rotationsbegrenzer 180 dient hier bevorzugt als zusätzlicher Anschlag für das Befestigungselement 230. Der Pfeil 1110 zeigt die mögliche Bewegungsrichtung des Druckführungsvorrichtungsverschlusses 200 bei einem Überdruck an, nämlich eine Bewegung die zuerst eine laterale Verschiebung des Druckführungsvorrichtungsverschlusses 200 bewirkt und dann eine Rotation des Druckführungsvorrichtungsverschlusses 200 um das Aufnahmeelement 150.

Die Figur 6 zeigt eine Ausschnittsvergrößerung 502 eines schematischen Schnittbildes analog dem der Figur 4 in einer Übergangsposition 15. Eine Druckwelle in Richtung der Druckausbreitungsrichtung 1510 hat den Druckführungsvorrichtungsverschluss 200 lateral von dem Sperrelement 170 weggeschoben, so dass das Sperrelement 170 eine Rotationsbewegung des Druckführungsvorrichtungsverschlusses 200 um ein Aufnahmeelement 150, bzw. je Seite ein Aufnahmeelement 150, nicht mehr durch Blockade eines Sperrvermittlers 235 verhindert. Der Sperrvermittler 235 wird hier durch einen Ausläufer des Befestigungselementes 230 gebildet, des auch das Aufnahmegegenstückelement 240 beherbergt, das einerseits die laterale Verschiebung vom Aufnahmeelement 150 weg oder zum Aufnahmeelement 150 hin erlaubt und andererseits auch die Rotation des Druckführungsvorrichtungsverschlusses 200 um ein Aufnahmeelement 150 ermöglicht. In diesem Beispiel ist das Aufnahmegegenstückelement 240 ein Langloch. Bevorzugt weist die erste Seitenfläche 120 und/oder die zweite Seitenfläche 122 auch einen Rotationsbegrenzer 180 auf, der als Anschlag für den Sperrvermittler dient und so die Rotation des Druckführungsvorrichtungsverschlusses 200 um die Aufnahmeelemente 150 begrenzt. Der Pfeil 1110 zeigt die Richtung der möglichen Bewegungen an, wobei eine weitere laterale Bewegung des Druckführungsvorrichtungsverschlusses 200 hier durch den Anschlag des Aufnahmeelementes 150 an einen Rand des Aufnahmegegenstückelementes 240 begrenzt wird.

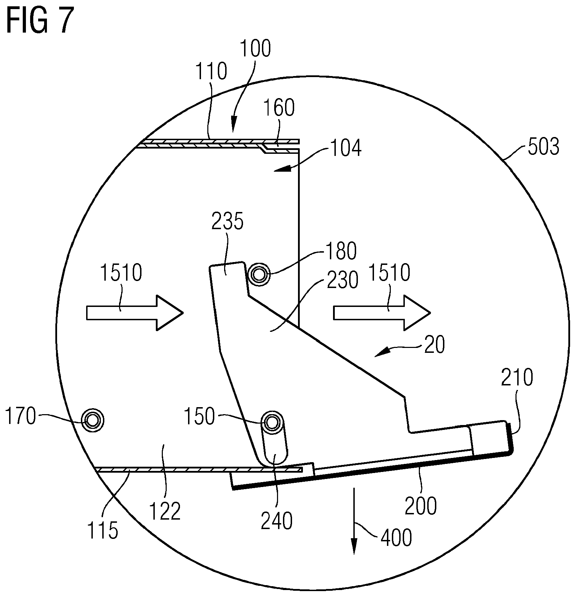

Bei der gezeigten Übergangsposition 15 wird der Sperrvermittler 235 gerade nicht mehr durch das Sperrelement 170 an einer Rotation gehindert und auch das Halteelement 210 hat die Halteelementführung 160 verlassen, so dass weder eine Rotation durch die Führung verhindert und/oder erschwert wird noch eine Kraft, sei es durch Klemmen oder magnetische Wechselwirkung, einer lateralen oder Rotationsbewegung entgegen wirkt. Weiter ist zu erkennen, dass in einer bevorzugten Variante die Oberseite 110 der Druckführungsvorrichtung 100 vollständig oder im Bereich des Druckführungsvorrichtungsverschlusses 200 aus zwei oder mehr Teilen, also beispielsweise aus einem ersten Oberseitenblech 111 und einem zweiten Oberseitenblech 112, gebildet wird. Das erste Oberseitenblech 111 und das zweiten Oberseitenblech 112 sind derart ausgeführt, dass entweder, wie gezeigt das, zweite Oberseitenblech 112 eine Biegung aufweist und so das erste Oberseitenblech 111 und das zweite Oberseitenblech 112 die Halteelementführung 160 ausbilden oder alternativ, hier nicht gezeigt, können die Biegung auch das erste Oberseitenblech 111 oder das erste Oberseitenblech 111 und das zweite Oberseitenblech 112 aufweisen um die Halteelementführung 160 ausbilden. Die Halteelementführung 160 kann aber auch alternativ oder zusätzlich, hier nicht gezeigt, an einer ersten Seitenfläche 120 und/oder einer zweiten Seitenfläche 122 und/oder einer Unterseite 115 der Druckführungsvorrichtung 100 angeordnet sein. Bei einer Anordnung an einer Unterseite 115 muss speziell daran gedacht werden, dass dann das Halteelement 210 an der unteren Kante, hier nicht gezeigt, des Druckführungsvorrichtungsverschlusses 200 angeordnet sein muss und dass das an der unteren Kannte angeordnete Halteelement 210 die Rotation des Druckführungsvorrichtungsverschlusses 200 nicht derart behindern darf, dass die Rotation auf einen Bereich beschränkt ist, der kleiner ist als der durch den Rotationsbegrenzer 180 und das Sperrelement 170 zugelassene Bereich, also der Gasaustrittsbereich 104 nicht oder nicht wesentlich durch den Druckführungsvorrichtungsverschluss 200 in der zweiten Position 20 der Figur 7 beschränkt, also verkleinert, wird.

Die Figur 7 zeigt eine Ausschnittsvergrößerung 503 eines schematischen Schnittbildes ähnlich Figur 4 in einer zweiten Position 20 des Druckführungsvorrichtungsverschlusses 200. Der Druckführungsvorrichtungsverschluss 200 befindet sich in der zweiten Position 20 an der Druckführungsvorrichtung 100 und verschließt die Druckführungsvorrichtung 100 so nicht an der Seite, an der er angeordnet ist, das heißt der Gasaustrittsbereich 104 ist weitestgehend frei, also offen. Der Gasaustrittsbereich 104 wird also nicht oder nicht wesentlich durch den Druckführungsvorrichtungsverschluss 200 in der zweiten Position 20 beschränkt, also verkleinert.

Von der Druckführungsvorrichtung 100 sind hier eine Oberseite 110, eine zweite Seitenfläche 122 und eine Unterseite 115 sichtbar. Der Druckführungsvorrichtungsverschluss 200 ist mit zwei Befestigungselementen 230, eines davon gezeigt, an der Druckführungsvorrichtung 100 beweglich befestigt, beziehungsweise angeordnet.

Eine Druckwelle in Richtung der Druckausbreitungsrichtung 1510 hat den Druckführungsvorrichtungsverschluss 200 lateral von dem Sperrelement 170 weggeschoben, so dass das Sperrelement 170 eine Rotationsbewegung des Druckführungsvorrichtungsverschlusses 200 um ein Aufnahmeelement 150, bzw. je Seite ein Aufnahmeelement 150, nicht mehr durch Blockade eines Sperrvermittlers 235 verhindert und der Druckführungsvorrichtungsverschluss 200 ist durch eine Rotation nach unten, also in Richtung der Erdanziehungskraft 400, von dem Gasaustrittsbereich 104 weggeklappt, so dass sich eine Druckwelle in Richtung der Druckausbreitungsrichtung 1510 aus dem Gasaustrittsbereich 104 herausbewegen kann. Der Rotationsbegrenzer 180 verhindert eine weitergehende Rotation des Druckführungsvorrichtungsverschlusses 200, indem der Rotationsbegrenzer 180 als Anschlag für den Sperrvermittler 235 dient. Der Druckführungsvorrichtungsverschluss 200 hat sich um das Aufnahmeelement 150, mit dem Aufnahmestückelement 240, gedreht. Die Rotation des Druckführungsvorrichtungsverschlusses 200 wird also durch die Erdanziehungskraft 400 und/oder einen Überdruck in Druckführungsvorrichtung, gekennzeichnet durch den Pfeil in die Druckausbreitungsrichtung 1510 bewirkt.

### Bezugszeichenliste

- 1: Druckentlastungsvorrichtung;
- 10: erste Position des Druckführungsvorrichtungsverschluss 200 relativ zur Druckführungsvorrichtung 100;
- 15: Übergangsposition des Druckführungsvorrichtungsverschluss 200 relativ zur Druckführungsvorrichtung 100;
- 20: zweite Position des Druckführungsvorrichtungsverschluss 200 relativ zur Druckführungsvorrichtung 100;
- 100: Druckführungsvorrichtung der Druckentlastungsvorrichtung 1;
- 102: Gaseintrittsbereich;
- 104: Gasaustrittsbereich;
- 110: Oberseite der Druckführungsvorrichtung 100;
- 111: erstes Oberseitenblech der Druckführungsvorrichtung 100;
- 112: zweites Oberseitenblech der Druckführungsvorrichtung 100;
- 115: Unterseite der Druckführungsvorrichtung 100;
- 120: erste Seitenfläche der Druckführungsvorrichtung 100;
- 122: zweite Seitenfläche der Druckführungsvorrichtung 100;
- 124: Abdeckung für das Befestigungselement 230;
- 150: Aufnahmeelement;
- 160: Halteelementführung;
- 170: Sperrelement;
- 180: Rotationsbegrenzer;
- 200: Druckführungsvorrichtungsverschluss der Druckentlastungsvorrichtung 1;
- 210: Halteelement;
- 230: Befestigungselement;
- 235: Sperrvermittler;
- 240: Aufnahmegegenstückelement;
- 300: Rotationsrichtung;
- 400: Erdanziehungskraft;
- 500: Vergrößerter Bereich;
- 501: Vergrößerter Bereich;
- 502: Vergrößerter Bereich;
- 503: Vergrößerter Bereich;
- 1010: Pfeil in Richtung der blockierten Bewegung;
- 1110: Pfeil in Richtung der möglichen Bewegungen;
- 1510: Druckausbreitungsrichtung.

## Patentansprüche

1. Druckentlastungsvorrichtung (1) für eine Mittel- und/oder Hochspannungsschaltanlage, mit einer Druckführungsvorrichtung (100), wobei die Druckführungsvorrichtung (100) einen oder mehr Gaseintrittsbereiche (102) und mit einen oder mehr Gasaustrittsbereiche (104) aufweist, und einem Druckführungsvorrichtungsverschluss (200), wobei der Druckführungsvorrichtungsverschluss (200) in einer ersten Position (10) die Druckführungsvorrichtung (100), und damit den oder die Gasaustrittsbereiche (104), verschließt und wobei der Druckführungsvorrichtungsverschluss (200) in einer zweiten Position (20) die Druckführungsvorrichtung (100), und damit den oder die Gasaustrittsbereiche (104), nicht verschließt, wobei
die Druckführungsvorrichtung (100)
- ein oder mehr Aufnahmeelemente (150),
- und ein oder mehr Sperrelemente (170) aufweist,
wobei
der Druckführungsvorrichtungsverschluss (200) ein oder mehr Befestigungselemente (230) und ein oder mehr Sperrvermittler (235) aufweist, wobei das oder die Befestigungselemente (230) jeweils ein Aufnahmegegenstückelement (240) aufweisen, **dadurch gekennzeichnet, dass** das Aufnahmegegenstückelement (240) und das jeweilige Aufnahmeelement (150) derart verbunden sind, dass der Druckführungsvorrichtungsverschluss (200) mit der Druckführungsvorrichtung (100) beweglich verbunden ist und der Druckführungsvorrichtungsverschluss (200) relativ zu der Druckführungsvorrichtung (100) entlang einer Druckausbreitungsrichtung (1510) verschiebbar und rotierbar anordenbar ist,
dass das oder die Sperrelemente (170) mit den Sperrvermittlern (235) in der ersten Position (10) eine Rotation des Druckführungsvorrichtungsverschlusses (200) relativ zu der Druckführungsvorrichtung (100) verhindern und beginnend mit einer Übergangsposition (15) bis einschließlich der zweiten Position (20) eine Rotation des Druckführungsvorrichtungsverschlusses (200) relativ zu der Druckführungsvorrichtung (100) zulassen, wobei die Überführung des Druckführungsvorrichtungsverschlusses (200)von der ersten Position (10) in die Übergangsposition (15) durch die Verschiebung des Druckführungsvorrichtungsverschlusses (200) relativ zur Druckführungsvorrichtung (100) bewirkbar ist und durch die Verschiebung des Druckführungsvorrichtungsverschlusses (200) von der ersten Position (10) in die der Übergangsposition (15) der Sperrvermittler (235) von dem Sperrelement (170) freigegeben wird.

2. Druckentlastungsvorrichtung (1) nach Anspruch 1,
**dadurch gekennzeichnet, dass** die Rotation des Druckführungsvorrichtungsverschlusses (200) durch eine Erdanziehungskraft (400) und/oder einen Überdruck in Druckführungsvorrichtung bewirkbar ist.

3. Druckentlastungsvorrichtung (1) nach Anspruch 1 oder 2,
**dadurch gekennzeichnet, dass** die Druckführungsvorrichtung (100) weiter ein oder mehr Rotationsbegrenzer (180) aufweist, wobei der oder die Rotationsbegrenzer (180) eine mögliche Rotation des Druckführungsvorrichtungsverschlusses (200) relativ zu der Druckführungsvorrichtung (100) zwischen der Übergangsposition (15) und der zweiten Position (20) begrenzen.

4. Druckentlastungsvorrichtung (1) nach Anspruch 3,
**dadurch gekennzeichnet, dass** der oder die Rotationsbegrenzer (180) eine mögliche Rotation des Druckführungsvorrichtungsverschlusses (200) relativ zu der Druckführungsvorrichtung (100) zwischen der Übergangsposition (15) und der zweiten Position (20) durch ein Zusammenwirken mit den Sperrvermittlern (235) begrenzen.

5. Druckentlastungsvorrichtung (1) nach einem der vorhergehenden Ansprüche,
**dadurch gekennzeichnet, dass** die Verschiebung des Druckführungsvorrichtungsverschlusses (200) relativ zur Druckführungsvorrichtung (100) durch einen Überdruck bewirkbar ist.

6. Druckentlastungsvorrichtung (1) nach einem der vorstehenden Ansprüche,
**dadurch gekennzeichnet, dass** die Druckführungsvorrichtung (100) eine Halteelementführung (160) aufweist, in die in der ersten Position (10) ein Halteelement (210) eingreift, wobei zwischen der ersten Position (10) und der Übergangsposition (15) das Halteelement (210) teilweise in die Halteelementführung (160) eingreift und mit Erreichen der Übergangsposition (15) das Halteelement (210) die Halteelementführung (160) verlässt, so dass eine Rotation des Druckführungsvorrichtungsverschlusses (200) relativ zu der Druckführungsvorrichtung (100) nicht mehr verhindert wird.

7. Druckentlastungsvorrichtung (1) nach Anspruch 6,
**dadurch gekennzeichnet, dass** beim Überführen des Druckführungsvorrichtungsverschlusses (200) der ersten Position (10) in die Übergangsposition (15) eine Verharrungskraft überwunden werden muss, die zwischen dem Halteelement (210) und der Halteelementführung (160) wirkt.

8. Druckentlastungsvorrichtung (1) nach Anspruch 7,
**dadurch gekennzeichnet, dass** die zu überwindende Verharrungskraft durch eine Klemmvorrichtung und/oder Magnethalterung erzeugbar ist.

9. Druckentlastungsvorrichtung (1) nach Anspruch 8,
**dadurch gekennzeichnet, dass** die Magnethalterung aus einem oder mehr Permanentmagneten und einen oder mehr Magnetelementen gebildet wird, wobei der eine oder die mehreren Permanentmagnete mit den Magnetelementen in der ersten Position (10) in Wechselwirkung stehen und entweder der oder die Permanentmagnete an der Halteelementführung (160) und die Magnetelemente an dem Halteelement (210) angeordnet sind oder die Permanentmagnete an dem Halteelement (210) und die Magnetelemente an der Halteelementführung (160) angeordnet sind.

10. Druckentlastungsvorrichtung (1) nach Anspruch 9,
**dadurch gekennzeichnet, dass** die Permanentmagnete sich teilweise oder vollständig über eine Fläche der Halteelementführung (160) erstrecken.

11. Druckentlastungsvorrichtung (1) nach Anspruch 10,
**dadurch gekennzeichnet, dass** die Magnetelemente durch ein ferromagnetisch oder paramagnetisch ausgeführtes Halteelement (210) gebildet wird.

12. Druckentlastungsvorrichtung (1) nach Anspruch 9,
**dadurch gekennzeichnet, dass** die Magnetelemente durch eine ferromagnetisch oder paramagnetisch ausgeführte Halteelementführung (160) gebildet wird und die Permanentmagnete sich teilweise oder vollständig über eine Fläche des Halteelement (210) erstrecken oder an das Halteelement (210) angrenzen.

13. Druckentlastungsvorrichtung (1) nach Anspruch 12,
**dadurch gekennzeichnet, dass** das Halteelement (210) ein paramagnetisches Material enthält und die Permanentmagnete an das Halteelement (210) angrenzen.

14. Verfahren zum Betreiben einer Druckentlastungsvorrichtung (1) nach einem der vorstehenden Ansprüche,
**dadurch gekennzeichnet, dass** die im Falle eines Überdruckes in der Druckentlastungsvorrichtung (1) der Druckführungsvorrichtungsverschluss (200) durch den Überdruck relativ zur Druckführungsvorrichtung (100) aus der ersten Position (10) entlang einer Druckausbreitungsrichtung (1510) in eine Übergangsposition (15) bewegt wird und weiter durch eine Erdanziehungskraft (400) und den Überdruck in der Druckentlastungsvorrichtung (1) der Druckführungsvorrichtungsverschluss (200) in eine Rotation des Druckführungsvorrichtungsverschlusses (200) relativ zu der Druckführungsvorrichtung (100) versetzt wird, wodurch der Druckführungsvorrichtungsverschluss (200) den oder die Gasaustrittsbereiche (104) nicht mehr verschlossen sind.

## Claims

1. Pressure-relief device (1) for a medium- and/or high-voltage switchgear installation, comprising a pressure-conducting device (100), wherein the pressure-conducting device (100) has one or more gas inlet regions (102) and one or more gas outlet regions (104), and comprising a pressure-conducting device closure (200), wherein the pressure-conducting device closure (200) closes the pressure-conducting device (100) and thus the gas outlet region or regions (104) in a first position (10) and wherein the pressure-conducting device closure (200) does not close the pressure-conducting device (100) and thus the gas outlet region or regions (104) in a second position (20), wherein
the pressure-conducting device (100) has
- one or more receiving elements (150),
- and one or more blocking elements (170),
wherein the pressure-conducting device closure (200) has one or more fastening elements (230) and one or more blocking agents (235), wherein the fastening element or elements (230) each have a receiving mating piece element (240), **characterized in that** the receiving mating piece element (240) and the respective receiving element (150) are connected in such a way that the pressure-conducting device closure (200) is movably connected to the pressure-conducting device (100) and the pressure-conducting device closure (200) can be arranged displaceably and rotatably relative to the pressure-conducting device (100) along a pressure propagation direction (1510),
**in that** the blocking element or elements (170) with the blocking agents (235) prevent a rotation of the pressure-conducting device closure (200) relative to the pressure-conducting device (100) in the first position (10) and permit a rotation of the pressure-conducting device closure (200) relative to the pressure-conducting device (100) starting with a transitional position (15) up to and including the second position (20), wherein the pressure-conducting device closure (200) can be moved from the first position (10) to the transitional position (15) by the displacement of the pressure-conducting device closure (200) relative to the pressure-conducting device (100) and the blocking agent (235) is released from the blocking element (170) by the displacement of the pressure-conducting device closure (200) from the first position (10) to the transitional position (15) .

2. Pressure-relief device (1) according to Claim 1,
**characterized in that**
the rotation of the pressure-conducting device closure (200) can be implemented by Earth's force of gravity (400) and/or an overpressure in the pressure-conducting device.

3. Pressure-relief device (1) according to Claim 1 or 2,
**characterized in that**
the pressure-conducting device (100) further has one or more rotation limiters (180), wherein the rotation limiter or limiters (180) limits/limit a possible rotation of the pressure-conducting device closure (200) relative to the pressure-conducting device (100) between the transitional position (15) and the second position (20).

4. Pressure-relief device (1) according to Claim 3,
**characterized in that**
the rotation limiter or limiters (180) limits/limit a possible rotation of the pressure-conducting device closure (200) relative to the pressure-conducting device (100) between the transitional position (15) and the second position (20) by interaction with the blocking agents (235).

5. Pressure-relief device (1) according to one of the preceding claims,
**characterized in that**
the displacement of the pressure-conducting device closure (200) relative to the pressure-conducting device (100) can be implemented by an overpressure.

6. Pressure-relief device (1) according to one of the preceding claims,
**characterized in that**
the pressure-conducting device (100) has a retaining element guide (160) into which a retaining element (210) engages in the first position (10), wherein the retaining element (210) engages partially into the retaining element guide (160) between the first position (10) and the transitional position (15) and the retaining element (210) leaves the retaining element guide (160) when the transitional position (15) is reached, so that a rotation of the pressure-conducting device closure (200) relative to the pressure-conducting device (100) is no longer prevented.

7. Pressure-relief device (1) according to Claim 6,
**characterized in that**,
when the pressure-conducting device closure (200) is moved from the first position (10) to the transitional position (15), a maintenance force which acts between the retaining element (210) and the retaining element guide (160) has to be overcome.

8. Pressure-relief device (1) according to Claim 7, **characterized in that**
the maintenance force to be overcome can be generated by a clamping device and/or magnet holder.

9. Pressure-relief device (1) according to Claim 8,
**characterized in that**
the magnet holder is formed from one or more permanent magnets and one or more magnet elements, wherein the one or the plurality of permanent magnets interacts/interact with the magnet elements in the first position (10) and either the permanent magnet or magnets is/are arranged on the retaining element guide (160) and the magnet elements are arranged on the holding element (210) or the permanent magnets are arranged on the retaining element (210) and the magnet elements are arranged on the retaining element guide (160).

10. Pressure-relief device (1) according to Claim 9,
**characterized in that**
the permanent magnets extend partially or completely over a surface of the retaining element guide (160).

11. Pressure-relief device (1) according to Claim 10,
**characterized in that**
the magnet elements are formed by a ferromagnetic or paramagnetic retaining element (210).

12. Pressure-relief device (1) according to Claim 9,
**characterized in that**
the magnet elements are formed by a ferromagnetic or paramagnetic retaining element guide (160) and the permanent magnets extend partially or completely over a surface of the retaining element (210) or adjoin the retaining element (210).

13. Pressure-relief device (1) according to Claim 12,
**characterized in that**
the retaining element (210) contains a paramagnetic material and the permanent magnets adjoin the retaining element (210).

14. Method for operating a pressure-relief device (1) according to one of the preceding claims,
**characterized in that**,
in the event of an overpressure in the pressure-relief device (1), the pressure-conducting device closure (200) is moved relative to the pressure-conducting device (100) from the first position (10), along a pressure propagation direction (1510), to a transitional position (15) by the overpressure and further the pressure-conducting device closure (200) is made to rotate relative to the pressure-conducting device (100) by Earth's force of gravity (400) and the overpressure in the pressure-relief device (1), as a result of which the pressure-conducting device closure (200) no longer closes the gas outlet region or regions (104).

## Revendications

1. Dispositif (1) de détente de la pression d'une installation de coupure pour la moyenne tension et/ou la haute tension, comprenant un dispositif (100) de conduite de la pression, dans lequel le dispositif (100) de conduite de la pression a une ou plusieurs parties (102) d'entrée de gaz et une ou plusieurs parties (104) de sortie de gaz et une fermeture (200) du dispositif de conduite de la pression, dans lequel la fermeture (200) du dispositif de conduite de la pression ferme dans une première position (10) le dispositif (100) de conduite de la pression et ainsi la ou les parties (104) de sortie de gaz et dans lequel la fermeture (200) du dispositif de conduite de la pression ne ferme pas dans une deuxième position (20) le dispositif (100) de conduite de la pression et ainsi la ou les parties (104) de sortie de gaz,
dans lequel
le dispositif (100) de conduite de la pression a
- un ou plusieurs éléments (150) de réception,
- et un ou plusieurs éléments (170) d'arrêt,
dans lequel
la fermeture (200) du dispositif de conduite de la pression a un ou plusieurs éléments (230) de fixation et un ou plusieurs intermédiaires (235) d'arrêt, dans lequel le un ou les éléments (230) de fixation ont chacun un élément (240) de pièce antagoniste de réception, **caractérisé en ce que**
l'élément (240) de pièce antagoniste de réception et l'élément (150) respectif de réception sont reliés de manière à ce que la fermeture (200) du dispositif de conduite de la pression soit reliée de manière mobile au dispositif (100) de conduite de la pression et de manière à ce que la fermeture (200) du dispositif de conduite de la pression puisse être montée de manière coulissante ou tournante par rapport au dispositif (100) de conduite de la pression le long d'une direction (1510) de propagation de la pression,
**en ce que** le ou les éléments (170) d'arrêt empêchent avec les éléments (235) intermédiaires d'arrêt dans la première position (10) une rotation de la fermeture (200) du dispositif de conduite de pression par rapport au dispositif (100) de conduite de la pression et, en commençant par une position (15) transitoire jusqu'à et y compris la deuxième position (20), autorise une rotation de la fermeture (200) du dispositif de conduite de la pression par rapport au dispositif (100) de conduite de la pression,
dans lequel le passage de la fermeture (200) du dispositif de conduite de la pression de la première position (10) à la position (15) transitoire peut être provoquée par le déplacement de la fermeture (200) du dispositif de conduite de la pression par rapport au dispositif (100) de conduite de la pression et est libéré par l'élément (170) d'arrêt par le passage de la fermeture (200) du dispositif de conduite de la pression de la première position (10) dans celle de la position (15) transitoire de l'intermédiaire (235) d'arrêt.

2. Dispositif (1) de détente de la pression suivant la revendication 1,
**caractérisé en ce que**
la rotation de la fermeture (200) du dispositif de conduite de la pression peut être provoquée par une force (400) de gravité et/ou par une surpression dans le dispositif de conduite de la pression.

3. Dispositif (1) de détente de la pression suivant la revendication 1 ou 2,
**caractérisé en ce que**
le dispositif (100) de conduite de la pression a en outre un ou plusieurs limiteurs (180) de rotation, dans lequel le un ou les limiteurs (180) de rotation limitent une rotation possible de la fermeture (200) du dispositif de conduite de la pression par rapport au dispositif (100) de conduite de la pression entre la position (15) transitoire et la deuxième position (20).

4. Dispositif (1) de détente de la pression suivant la revendication 3,
**caractérisé en ce que**
le ou les limiteurs (180) de rotation limitent une rotation possible de la fermeture (200) du dispositif de conduite de la pression par rapport au dispositif (100) de conduite de la pression entre la position (15) transitoire et la deuxième position (20) par une coopération avec les intermédiaires (235) d'arrêt.

5. Dispositif (1) de détente de la pression suivant l'une des revendications précédentes,
**caractérisé en ce que**
le déplacement de la fermeture (200) du dispositif de conduite de la pression par rapport au dispositif (100) de conduite de la pression peut être provoqué par une surpression.

6. Dispositif (1) de détente de la pression suivant l'une des revendications précédentes,
**caractérisé en ce que**
le dispositif (100) de conduite de la pression a un guidage (160) d'élément de maintien, dans lequel dans la première position (10) un élément (210) de maintien pénètre, dans lequel entre la première position (10) et la position (15) transitoire, l'élément (210) de maintien pénètre en partie dans le guidage (160) de l'élément de maintien et, lorsque la position (15) transitoire est atteinte, l'élément (210) de maintien quitte le guidage (160) de l'élément de maintien de manière à ne plus empêcher une rotation de la fermeture (200) du dispositif de conduite de la pression par rapport au dispositif (100) de conduite de la pression.

7. Dispositif (1) de détente de la pression suivant la revendication 6,
**caractérisé en ce que**
lors du passage de la fermeture (200) du dispositif de conduite de la pression de la première position (10) à la position (15) transitoire, doit être surmontée une force de persévérance, qui agit entre l'élément (210) de maintien et le guidage (160) de l'élément de maintien.

8. Dispositif (1) de détente de la pression suivant la revendication 7,
**caractérisé en ce que**
la force de persévérance à surmonter peut être produite par un dispositif de serrage et/ou par une fixation par aimant.

9. Dispositif (1) de détente de la pression suivant la revendication 8,
**caractérisé en ce que**
la fixation par aimant est formée d'un ou plusieurs aimants permanents et d'un ou plusieurs éléments magnétiques, dans lequel le un ou les plusieurs aimants permanents sont en interaction avec les éléments magnétiques dans la première position (10) et ou bien le ou les aimants permanents sont montés sur le guidage (160) de l'élément de maintien et les éléments magnétiques sur l'élément (210) de maintien ou bien les aimants permanents sont montés sur l'élément (210) de maintien et les éléments magnétiques sur le guidage (160) de l'élément de maintien.

10. Dispositif (1) de détente de la pression suivant la revendication 9,
**caractérisé en ce que**
les aimants permanents s'étendent en partie ou complètement sur une surface du guidage (160) de l'élément de maintien.

11. Dispositif (1) de détente de la pression suivant la revendication 10,
**caractérisé en ce que**
les éléments magnétiques sont formés par un élément (210) de maintien réalisé ferromagnétiquement ou paramagnétiquement.

12. Dispositif (1) de détente de la pression suivant la revendication 9,
**caractérisé en ce que**
les éléments magnétiques sont formés par un guidage (160) de l'élément de maintien réalisé ferromagnétiquement ou paramagnétiquement et les aimants permanents s'étendent en partie ou complètement sur une surface de l'élément (210) de maintien ou sont voisins de l'élément (210) de maintien.

13. Dispositif (1) de détente de la pression suivant la revendication 12,
**caractérisé en ce que**
l'élément (210) de maintien contient un matériau paramagnétique et les aimants permanents sont voisins de l'élément (210) de maintien.

14. Procédé pour faire fonctionner un dispositif (1) de détente de la pression suivant l'une des revendications précédentes,
**caractérisé en ce que**
dans le cas d'une surpression dans le dispositif (1) de détente de la pression, on fait passer la fermeture (200) du dispositif de conduite de la pression par une surpression par rapport au dispositif (100) de conduite de la pression, de la première position (10) le long d'une direction (1510) de propagation de la pression à une position (15) transitoire et on continue, par une force (400) de gravité et par la surpression dans le dispositif (1) de détente de la pression, à mettre la fermeture (200) du dispositif de conduite de la pression dans une rotation de la fermeture (200) du dispositif de conduite de la pression par rapport au dispositif (100) de conduite de la pression, grâce à quoi la fermeture (200) du dispositif de conduite de la pression ne ferme plus là où les parties (104) de sortie de gaz.
